# EUROPEAN PATENT APPLICATION

(11) **EP 2 779 177 A1**
(43) Date of publication of application: **17.09.2014**
(21) Application number: 14460014.5
(22) Date of filing: 12.03.2014
(51) Int. Cl.: H01B 13/22, H01B 7/29, C08L 83/04

(54) **Ceramizable silicone composites destined for covers of electrical cables**

(30) Priority: 15.03.2013 PL 40316013
(71) Applicant: Politechnika Lódzka, 90-924 Lódz (PL); AKADEMIA GORNICZO-HUTNICZA im. Stanislawa Staszica, 30-059 Krakow (PL); Instytut Inzynierii Materialow Polimerowych i Barwnikow, 87-100 Torun (PL)
(72) Inventor: Jan, Dul, 05-820 Piastów (PL); Grzegorz, Parys, 05-820 Piastów (PL); Zbigniew, P?dzich, 30-619 Kraków (PL); Dariusz, Bieli?ski, 95-100 Zgierz (PL); Irena, Porcja, 37-310 Nowa Sarzyna (PL); Zbigniew, Walkowiak, 37-310 Nowa Sarzyna (PL)

(57) **Abstract**

Ceramizable silicone composition destined for covers of electrical cables composed of silicone rubber containing methyl(vinyl)silicone elastomer, pyrogenic silica of the specific surface 120 - 380 m²/g, the mineral phase containing wollastonite and one from the group of other fillers like: quartz, magnesium oxide or titanium oxide, platinum catalyst and a peroxide curing agent. The composite mixes characterize themselves by the content of 100 weight parts of methyl(vinyl)silicone elastomer of density 1.081 - 1.193 g/cm³, having molecular weight of 400,000 - 740,000 and vinyl groups content of 0.01 - 0.5 %, 0.5 - 10 weight parts of low molecular weight α, ω - di(hydroxyl)siloxane, 22 - 55 weight parts of pyrogenic silica and 18 - 55 weight parts of the mineral phase being either wollastonite or its mixture with quartz, in which wollastonite content exceeds 20 weight % of the whole composite mix, and the amount of platinum catalyst is 10 - 250 ppm, recalculated for pure platinum.

## Description

The subject of invention is the ceramizable silicone composition destined for covers of electrical cables, spreaded onto metal wires in high rate or very high rate extrusion process.

Application of silicone composites, undergoing ceramization on fire, is commonly known. It is aimed to produce fire resistant electrical cables, which are able to provide electricity supply to electrical circuits and systems responsible for fire protection and safety, installed in buildings or other public places of high fire safety level.

According to the technical state-of-the art, the rate of formation of protective ceramic layer of the cable insulation should not exceed 1 min at the temperature 900°C - 1100°C. Such covers are most frequently made of silicone rubber filled with pyrogenic silica of very good strengthening effect and the mineral phase composed of inorganic compounds, ceramically active under high temperature heating.

Fire resistant silicone compositions, susceptible to ceramization at elevated temperature, have been described in many generally accessible publications, i.e. J. Mansouri, R. P. Burford, Y. B. Cheng, L. Hanu, "Formation of Strong Ceramified Ash from Silicone-Based Compositions" (Journal of Materials Science 2005, 40, 5741-5749) or numerous patent declarations, e.g. US 6051642, GB 2360780, US 2006/0084745 and US 6239378.

Fire resistant coating formed from the composition containing 30 - 90 weight % of thermoset siloxane polymer having at least 2 alkenyl groups per molecule, 1 - 65 weight % of a silica filler having specific surface of 150 - 400 m²/g and 5 - 70 weight % of wollastonite having particles of average size from 2 to 30 µm, is known from the description of American patent US 6239378. The composition can additionally contain other ceramic components, e.g. diatomite, calcium carbonate, titanium dioxide and mica. From the mix of such a composition, after admixing of organic peroxide, one can extrude a cable cover, preferably 0,2 - 0,6 mm thick.

Processability of the composite mixes depends on their rheological properties, such as viscosity and flowability during extrusion. With increasing extrusion rate of the silicone cover on the metal wire, which determines the productivity and economic efficiency of cable production, requirements for lowering mixes viscosity and improvement of their flowability have to be met. Pressure and temperature in the extruder should be as low as possible to ensure continuity of cover spread onto the metal wire of the cable. Unfortunately, the improvement of rheological properties of the composite mixes implies the deterioration of physical properties of the cured composites, due to necessary decrease in loading of silicone elastomer with pyrogenic silica and mineral phase, very often accompanied by additional decrease in molecular weight of the elastomer. Low level of filler loading makes ceramization of the elastomer more difficult, what results in unacceptable poor mechanical properties of the ceramic surface layer of the cover.

Sustaining an acceptable balance between rheological properties of composite mixes and expected exploitation properties of the cured composites is difficult and so far, has yet to be achieved). It can be confirmed by known publications, e.g.: J. Clarke, P. K. Freakley, "Reduction in viscosity of an SBR compound caused by mastication and disagglomeration during mixing" (Rubber Chemistry and Technology 1994, 67(4), 700-715), P. K. Freakley, C. J. Sirisinha, "The influence of state-of-mix on the extrudate swell of a carbon black-filled styrene-butadiene rubber compound" (Journal of Applied Polymer Science 1997, 65(2), 305-315), Sadhan K. De, Jim R. White "Rubber Teclmologiest's Handbook" (Rapra Technology Limited 2001).

The essence of the ceramizable silicone composition destined for covers of electrical cable is based on the compounding methyl(vinyl)silicone elastomer with pyrogenic silica having the specific surface of 120 - 380 m²/g, the mineral phase being wollastonite and one from the group of other fillers like: quartz, magnesium oxide and titanium diooxide, recalculated for pure platinum, and a peroxide curing agent characterized in that the composite mixes contain 100 weight parts of methyl(vinyl)silicone elastomer of density 1.081 - 1.193 g/cm³, having molecular weight of 400,000 - 740,000 and vinyl groups content of 0.01 - 0.5 weight %, 0.5 - 10 weight parts of low molecular weight α, ω-di(hydroxyl)siloxane, 22 - 55 weight parts of the above described pyrogenic silica and 18 - 55 weight parts of the mineral phase being the mixture of wollastonite and quartz, in which the former is in the amount of 20 weight % of the whole composite mix. , and the amount of platinum catalyst is 10 - 250 ppm, in terms of a pure platinum.

Preferably, the surface of wollastonite can be modified by tri(methoxy)vinyl silane or tri(ethoxy)vinyl silane.

Additionally the mineral phase contains also 15 weight parts of magnesium oxide on 100 weight parts of the silicone rubber.

Additionally the mineral phase contains also up to 5 weight parts of titanium oxide on 100 weight parts of the silicone rubber.

Preferably, the composition can also contain zinc stearate or calcium stearate in the amount of 0.1 - 2.0 weight parts on 100 weight parts of the whole composite mix.

According to the invention, the composite mixes exhibit good physical properties after curing, very good extrusion processability and ceramize very fast during fire. It is thus suitable for production of covers destined for electrical cables using extrusion technology with the rate of 100 m/min for one wire of the cross-section 1,5 mm². The addition of a small amount of zinc stearate or calcium stearate additionally improves processing conditions.

The subject of invention has been described in details using the examples below.

### Example no. 1

The composition of following content has been prepared:
- silicone elastomer of density 1.084 g/cm³, composed of:
   - 100 weight parts of methyl(vinyl)siloxane rubber having molecular weight of 620.000 and reactive vinyl group content of 0.1 weight %,
   - 3 weight parts of low molecular weight α,ω - di(hydroxyl)siloxane,
   - 25 weight parts of pyrogenic silica having the specific surface of 300 m²/g,
- mineral phase containing:
   - 52 weight parts of wollastonite of particles size below 15 µm, surface modified by tri(ethoxy)vinyl silane, on 100 weight parts of silicone rubber,
   - 3 weight parts of titanium oxide of particles size below 7 µm, on 100 weight parts of silicone rubber,
- 0.5 weight parts of calcium stearate on 100 weight parts of the whole composite mix,
- 1,3-divinyl-1,1,3,3-tetra(metyl)disiloxane catalyst in the amount of 70 ppm, recalculated for pure platinum,
- 1.8 weight part of the curing agent in a form of paste containing: 50% of bis(2,4-dichlorobenzoile) peroxide, on 100 weight parts of the whole composite mix.

The above composition was used for extrusion on one-wire cable of 1,5 mm² cross-section with the rate of 110 m/min. After curing at 135°C, during 15 minutes, the elastomer of properties listed in the table below was obtained.

**Table**

| | Results | Requirements of cable industry |
|---|---|---|
| Tensile strength [MPa] | 7.3 | min. 5.0 |
| Elongation at break [%] | 318 | min. 150 |
| Tear strength [kN/m] | 17.1 | min. 12 |
| Hardness [°Sh A] | 67 | 60±10 |
| Time to ceramization of cured composite under the flame from gas burner at 1050°C [s] | below 60 | below 60 |

### Example no. 2

The composition of following content has been prepared:
- silicone elastomer of density 1.166 g/cm³, composed of:
   - 100 weight parts of methyl(vinyl)siloxane rubber having molecular weight of 710.000 and reactive vinyl group content of 0.09 weight %,
   - 7 weight parts of low molecular weight α,ω - di(hydroxyl)siloxane,
   - 45 weight parts of pyrogenic silica having the specific surface of 200 m²/g,
- mineral phase containing:
   - 20 weight parts of wollastonite of particles size below 15 µm, on 100 weight parts of silicone rubber,
   - 22 weight parts of quartz of particles size below 10 µm, on 100 weight parts of silicone rubber,
   - 8 weight parts of magnesium oxide of particle size below 10 µm,
- 0.7 weight parts of zinc stearate on 100 weight parts of the whole composite mix,
- 1,3-divinyl-1,1,3,3-tetra(metyl)disiloxane catalyst in the amount of 100 ppm, recalculated for pure platinum,
- 1.8 weight part of the curing agent in a form of paste containing: 50 weight % of bis(2,4-dichlorobenzoile) peroxide, on 100 weight parts of the whole composite mix.

The above composition was used for extrusion on one-wire cable of 1,5 mm² cross-section with the rate of 110 m/min . After curing at 135°C, during 20 minutes, the elastomer of properties listed in the table below was obtained.

**Table**

| | Results | Requirements of cable industry |
|---|---|---|
| Tensile strength [MPa] | 7.1 | min. 5.0 |
| Elongation at break [%] | 292 | min. 150 |
| Tear strength [kN/m] | 16.2 | min. 12 |
| Hardness [°Sh A] | 73 | 60±10 |
| Time to ceramization of cured composite under the flame from gas burner at 1050 °C [s] | below 60 | below 60 |

## Claims

1. Ceramizable silicone composition destined for covers of electrical cables, composed of silicone rubber containing methyl(vinyl)silicone elastomer, pyrogenic silica having the specific surface of 120 - 380 m²/g, the mineral phase containing wollastonite and one from the group of other fillers like: quartz, magnesium oxide or titanium oxide, platinum catalyst and a peroxide curing agent, **characterized in** the composition of 100 weight parts of methyl(vinyl)silicone elastomer of density 1.081 - 1.193 g/cm³, having molecular weight of 400,000 - 740,000 and vinyl groups content of 0.01-0.5 weight %, 0.5 - 10 weight parts of low molecular weight α, ω-di(hydroxyl)siloxane, 22 - 55 weight parts of pyrogenic silica and 18 - 55 weight parts of the mineral phase being either wollastonite or its mixture with quartz, in which wollastonite is in the amount exceeding 20 weight % of the whole composite mix, and the amount of platinum catalyst is 10 - 250 ppm, recalculated for pure platinum.

2. The composition of claim 1, **characterized in that** wollastonite has been subjected to surface modification with tri(methoxy)vinyl silane or tri(ethoxy)vinyl silane.

3. The composition of claim 1, **characterized in that** magnesium oxide, in the amount of 15 weight parts on 100 weight parts of silicone rubber, is one of the components of mineral phase.

4. The composition of claim 1, **characterized in that** titanium oxide, in the amount of 5 weight parts on 100 weight parts of silicone rubber, is one of the components of mineral phase.

5. The composition of claim 1, **characterized in that** zinc stearate or calcium stearate are added in the amount of 0.1 - 2.0 weight parts on 100 weight parts of the whole composite mix.
